# EUROPÄISCHE PATENTANMELDUNG

(11) **EP 0 734 837 A1**
(43) Veröffentlichungstag der Anmeldung: **02.10.1996**
(21) Anmeldenummer: 96102995.6
(22) Anmeldetag: 28.02.1996
(51) Int. Cl.: B29C 49/42, B29C 49/04, B29L 23/22

(54) **Vorrichtung zum Transportieren eines Vorformlings von dem Schlauchkopf zu der Blasform einer Blasmaschine**

(30) Priorität: 30.03.1995 DE 19511712
(71) Anmelder: VERWALTUNGSGESELLSCHAFT GEIGER TECHNIK GmbH & Co. KG, D-82467 Garmisch-Partenkirchen (DE)
(72) Erfinder: Geiger, Albert, 82467 Garmisch-Partenkirchen (DE)
(74) Vertreter: Flosdorff, Jürgen, Dr.

(57) **Zusammenfassung**

Die Vorformlings-Transportvorrichtung enthält zwei einander gegenüberliegende Seitenwandelemente (1,2), deren einander zugewandte Innenflächen (3,4) dem Formnest der Blasform (6) entsprechend gekrümmt verlaufen. An den Seitenwandelementen sind innen Stangen befestigt (6,7), die in Längsrichtung der Vorformlings-Transportvorrichtung versetzt zueinander wechselseitig angebracht sind und den Boden der Vorformlings-Transportvorrichtung bilden. Die Seitenwandelemente (1,2) sind aufeinander zu und voneinander weg bewegbar. In der Schlauchaufnahmeposition werden die Seitenwandelemente (1,2) soweit voneinander beabstandet, daß ein Vorformlingschlauch (10) geradlinig zwischen die Seitenwandelemente (1,2) gelegt werden kann. Anschließend werden die Seitenwandelemente (1,2) bis auf einen der Dicke des Vorformlingschlauchs (10) entsprechenden Abstand aufeinander zu bewegt, wodurch der Vorformlingschlauch (10) exakt in die Form der Formmulde der Blasform (6) gebracht wird. Über der Blasform werden die Seitenwandelemente (1,2) soweit auseinandergefahren, daß der Vorformlingschlauch (10) in die Formmulde fällt. Die Vorformlings-Transportvorrichtung wird nur linear bewegt.

## Beschreibung

Die Erfindung betrifft eine Vorformlings-Transportvorrichtung gemäß dem Oberbegriff des Patentanspruchs 1.

Bei der Herstellung von Hohlkörpern wie ein- oder mehrfach gekrümmten Rohrstücken besteht die Schwierigkeit, den schlauchförmigen Vorformling in die Blasform einzuführen. Weil das dem herzustellenden Hohlkörper entsprechende Formnest der Blasform mehr als eine Achse hat und diese Achsen im Winkel zueinander im Raum liegen, d.h. das Formnest aus mehreren, nach beiden Seiten auf und ab verlaufenden Abschnitten bestehen kann, kann entweder der waagerecht oder schräg liegende Teil der Blasform während eines geradlinigen Ausstoßes eines schlauchförmigen Vorformlings entsprechend hin- und her sowie gegebenenfalls auf- und abgefahren werden, oder diese Bewegung kann bei stillstehender Form vom Extruder ausgeführt werden. Da hierzu entweder das gesamte Schließgestell mit der Blasform oder der Extruder mit zugehörigem Schlauchkopf in drei zueinander senkrechten Achsen bewegt werden muß, ist die Bewegung erheblicher Massen erforderlich, da sowohl das Schließgestell als auch der Extruder selbst bei kleinen Maschinen mehrere Tonnen wiegen.

Um das Bewegen einer der beiden schweren Baugruppen Extruder/Schlauchkopf oder Schließgestell mit Blasform zu vermeiden, wird in der DE 43 05 735 eine leichte Zwischentransportform vorgeschlagen, die eine nach oben offene Formmulde enthält, deren Boden geöffnet werden kann. Diese Zwischentransportform nimmt den aus dem Schlauchkopf austretenden Schlauch auf und wird dann zu der Blasstation bewegt, um den Schlauch an die Blasform zu übergeben. Die Zwischentransportform hat unter anderem deshalb ein geringeres Gewicht, weil an ihr keine Schließkräfte angreifen und in ihr keine Kühlkanäle untergebracht werden müssen, so daß sie mit einem sehr viel geringeren Aufwand bewegbar ist, als eine der Baugruppen Extruder/Schlauchkopf und Schließgestell mit Blasform.

Die Formmulde der Zwischentransportform gemäß der DE 43 05 735 hat die Gestalt des Formnestes der Blasform. Zur Aufnahme des aus dem Schlauchkopf austretenden Schlauches wird die Zwischentransportform in ihrer Schlauchaufnahmestellung in beiden waagerechten Richtungen bewegt sowie in senkrechter Richtung angehoben oder gesenkt, bis das gesamte Schlauchstück in der Formmulde liegt. Anschließend wird die Zwischentransportform so über dem unteren Teil der Blasform positioniert, daß ihre Formmulde vertikal über dem Formnest der Blasform liegt, woraufhin der Boden der Formmulde geöffnet wird, so daß der Vorformling in das Formnest fällt.

Diese Zwischentransportform hat sich in der Praxis bestens bewährt. Allerdings ist es bei dieser vorbekannten Lösung des Problems der Vermeidung der Bewegung großer Massen erforderlich, die Zwischentransportform unter dem Schlauchkopf dreidimensional zu bewegen, was einen aufwendigen Steuer- und Bewegungsmechanismus erfordert.

Der vorliegenden Erfindung liegt die Aufgabe zugrunde, unter Beibehaltung der vorstehend geschilderten Vorteile eine Vorformlings-Transportvorrichtung für eine Blasmaschine anzugeben, deren Bewegungsmechanismus erheblich vereinfacht ist.

Eine weitere Aufgabe der Erfindung besteht darin, ein Verfahren anzugeben, mit dem ein- oder mehrfach gekrümmte Hohlkörper kostengünstig herstellbar sind.

Diese Aufgaben werden erfindungsgemäß durch die Merkmale der Patentansprüche 1 und 7 gelöst.

Vorteilhafte Weiterbildungen der Erfindung sind in den Unteransprüchen gekennzeichnet.

Die erfindungsgemäße Vorformlings-Transportvorrichtung hat Seitenwandelemente, deren Randkonturen denjenigen des Formnestes der Blasform entsprechen, d.h. die in der Aufsicht denselben Krümmungsverlauf wie das Formnest haben. Diese Seitenwandelemente sind so angeordnet, daß sie aufeinander zu und voneinander weg bewegbar sind. Dies ermöglicht es, die Seitenwandelemente in der Schlauchaufnahmeposition unter dem Schlauchkopf so weit voneinander zu beabstanden, daß der Vorformlingsschlauch geradlinig zwischen sie auf die in dieser Position den Boden verschließenden Bodenelemente aufgelegt werden kann. In einer zweiten Arbeitsposition werden die Seitenwandelemente so aufeinander zu bewegt, daß ihr Abstand im wesentlichen der Dicke des Vorformlingsschlauchs entspricht, wodurch der zuvor geradlinig auf dem Boden liegende Vorformlingsschlauch in eine Form gebracht wird, deren Kurvenverlauf mit demjenigen des Formnestes der Blasform übereinstimmt. Wenn dann die Vorformlingstransportvorrichtung so über der Blasform positioniert wird, daß die Mittellinie zwischen den Seitenwandelementen bzw. die Mittellinie des gekrümmten Vorformlings über der Mittellinie des Formnestes der Blasform liegt, wird der Boden der VorformlingsTransportvorrichtung geöffnet, so daß der Vorformling in das Formnest fällt.

Dabei kann die Verformung des Vorformlingschlauchs direkt im Anschluß an das geradlinige Auflegen des Schlauchs zwischen die Seitenwandelemente erfolgen, nachdem Quetschplatten gegeneinander bewegt wurden, die das Schlauchstück abquetschen, um es von dem nachfolgenden Schlauch zu trennen und dabei den Schlauch verschließen. Hierdurch wird sogenannte Stützluft, die während des Ausbringens des Schlauches durch eine Düse des Schlauchkopfs in den Schlauch eingelassen wird, in dem Vorformlingschlauch eingeschlossen, so daß dieser nicht zusammenfallen kann.

Es liegt aber im Rahmen der Erfindung, daß die Seitenwandelemente während des Transports der Vorformling-Transportvorrichtung zu dem Formnest oder aber über dem Formnest aufeinander zu bewegt werden können, um den Schlauch in einen gekrümmten Vorformling zu verwandeln.

Der Boden der Vorformlings-Transportvorrichtung kann eben, bevorzugt waagerecht ausgebildet sein, er kann aber auch dem Krümmungsverlauf des Formnestes der Blasform in Höhenrichtung (Z-Richtung) entsprechend verlaufen, um Längendifferenzen zu vermeiden.

Die Seitenwandelemente können jeweils mit zugehörigen Bodenelementen fest verbunden sein. Hierzu wird in weiterer Ausgestaltung der Erfindung vorgeschlagen, daß als Bodenelemente Stangen verwendet werden, die in Längsrichtung der Vorformlings-Transportvorrichtung wechselseitig versetzt zueinander an den Seitenelementen befestigt, bevorzugt in diese eingelassen sind. Wie bereits erwähnt, können diese Stangen alle auf gleicher Höhe angeordnet sein oder dem Verlauf des Formnestes entsprechend über- oder untereinander positioniert sein.

Die Stangen können einen kreisrunden Durchmesser haben, ohne daß die Erfindung hierauf beschränkt ist. Es können auch Stangen mit rechteckigem Querschnitt verwendet werden.

Anstelle von Stangen können auch plattenförmige Elemente Verwendung finden, die ebenfalls wechselseitig an dem rechten und dem linken Seitenwandelement befestigt sein können.

Weiter wird vorgeschlagen, daß die Bodenelemente, beispielsweise die Stangen, eine solche Länge haben, daß sie sich in der Schlauchaufnahmeposition, in der zwischen den in der Aufsicht gekrümmt verlaufenden Seitenwandelementen zumindest ein durchgehender, geradliniger Freiraum in einer solchen Breite verbleibt, die etwas größer als die Dicke des aufzunehmenden Schlauches ist, einander überlappen, so daß der Vorformlingschlauch an dicht beieinander liegenden Stellen aufliegt. Damit die Seitenwandelemente soweit aufeinander zu bewegt werden können, daß zwischen ihnen nur noch ein bevorzugt der Dicke des Schlauches entsprechender Abstand verbleibt, sollten in den Seitenwandelementen Bohrungen zum Eintritt der Bodenelemente, beispielsweise Stangen der gegenüberliegenden Seite ausgebildet sein.

Es sei hier darauf hingewiesen, daß die Erfindung nicht darauf beschränkt ist, daß beide Seitenwandelemente zur Verringerung ihres Abstands bewegt werden, sondern die Ausbildung kann auch so getroffen werden, daß ein Seitenwandelement feststehend angeordnet ist, während das andere Seitenwandelement beweglich angeordnet ist.

Wenn die Bodenelemente fest mit den Seitenwandelementen verbunden sind, wird der Boden der Vorformlings-Transportvorrichtung zweckmäßigerweise dadurch geöffnet, daß die Seitenwandelemente soweit auseinandergefahren werden, daß zwischen den freien Enden der Bodenelemente ein ausreichender Zwischenraum entsteht, durch den der Vorformling in das Formnest herabfallen kann.

Es liegt aber auch im Rahmen der Erfindung, daß die Bodenelemente gegenüber den Seitenwandelementen bewegbar angeordnet sein können. Hierbei kann vorgesehen sein, daß Stangen die jeweils zugeordneten Seitenwandelemente durchgreifen, wozu die Stangen beispielsweise in an der Außenseite der Seitenwandelemente angeordneten pneumatischen Zylindern sitzen können. Bei dieser Ausgestaltung der Erfindung können die Stangen in der Schlauchaufnahmeposition so weit nach innen ausgefahren sein, daß sie sich in dem Schlauchaufnahmebereich überlappen, wobei die Überlappung nicht unbedingt erforderlich ist. Wenn dann die Seitenwandelemente aufeinander zu bewegt werden, um den Schlauch in die gekrümmte Form zu bringen, können die Stangen in der ausgefahrenen Länge verbleiben und in Bohrungen der Gegenseite eintreten, wobei es im Rahmen der Erfindung liegt, daß die Stangen auch entsprechend zurückgezogen oder zurückgedrückt werden. Um den Vorformling aus dem Formnest der Vorformlings-Transportvorrichtung nach unten freizugeben, können dann die Bodenstangen nach außen zurückgezogen werden, ohne daß der Abstand zwischen den Seitenwandelementen verändert wird, was den Vorteil hat, daß der Vorformling absolut sicher seine vorgegebene gekrümmte Lage einhält, während die Stangen zurückgezogen werden, da er an den Seitenwänden seines Formnestes anliegt.

Die erfindungsgemäße Vorformlingstransportvorrichtung wird nur linear bewegt, und zwar sowohl in der Schlauchaufnahmestellung unter dem Schlauchkopf als auch auf dem Weg zu der Blasstation.

Die Seitenwandelemente werden ebenfalls nur linear hin- und herbewegt, weshalb die Vorformlings-Transportvorrichtung nur einen einfachen Bewegungsmechanismus benötigt.

Weitere Merkmale der Erfindung ergeben sich aus der nachfolgenden Beschreibung einer bevorzugten Ausführungsform sowie anhand der Zeichnung. Dabei zeigen:
- Fig. 1: eine Aufsicht auf eine Ausführungsform der Vorformlings-Transportvorrichtung in der Schlauchaufnahmeposition;
- Fig. 2: einen Vertikalschnitt durch die Vorformlings-Transportvorrichtung gemäß Fig. 1 entlang der Linie A-A;
- Fig. 3: die Vorformlings-Transportvorrichtung gemäß Fig. 1 im geschlossenen Zustand;
- Fig. 4: eine Aufsicht auf das Formnest der Blasform;

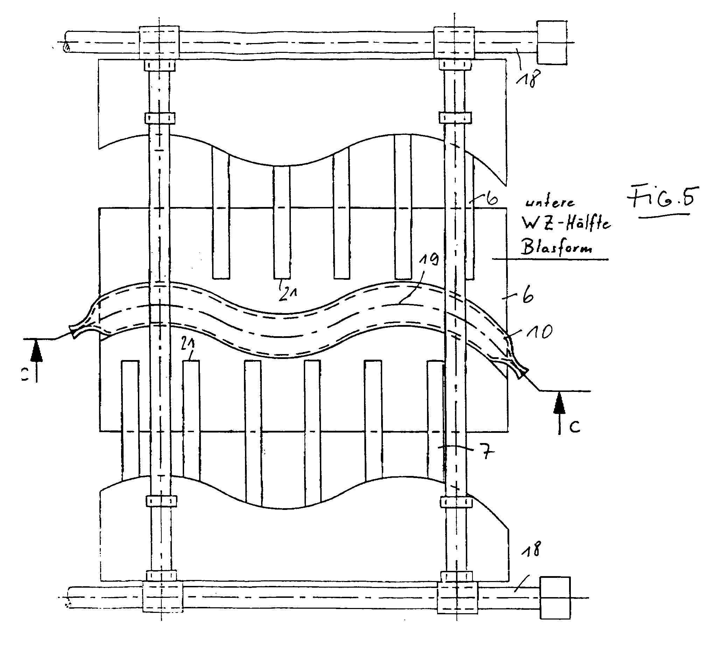

- Fig. 5: eine Aufsicht auf die Vorformlings-Transportvorrichtung im weit geöffneten Zustand zur Freigabe des Vorformlings und
- Fig. 6: einen Vertikalschnitt entlang der Linie C-C in Fig. 5.

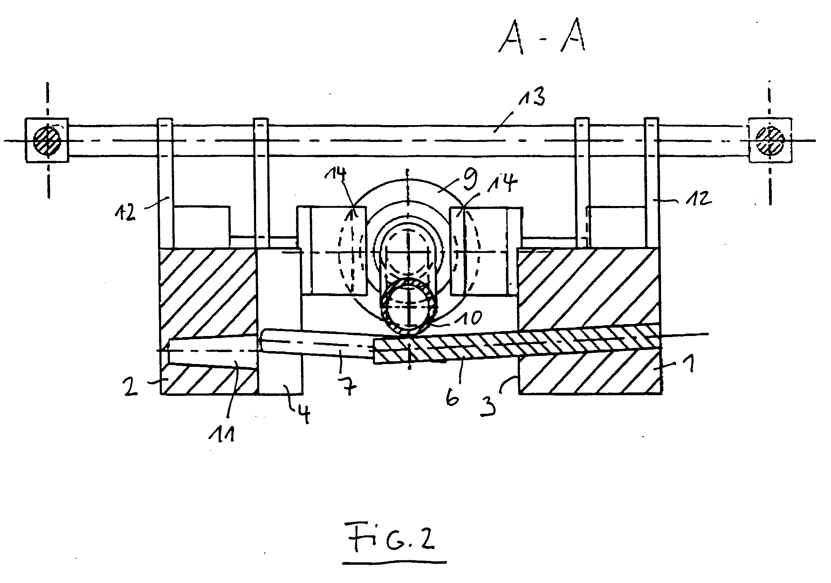

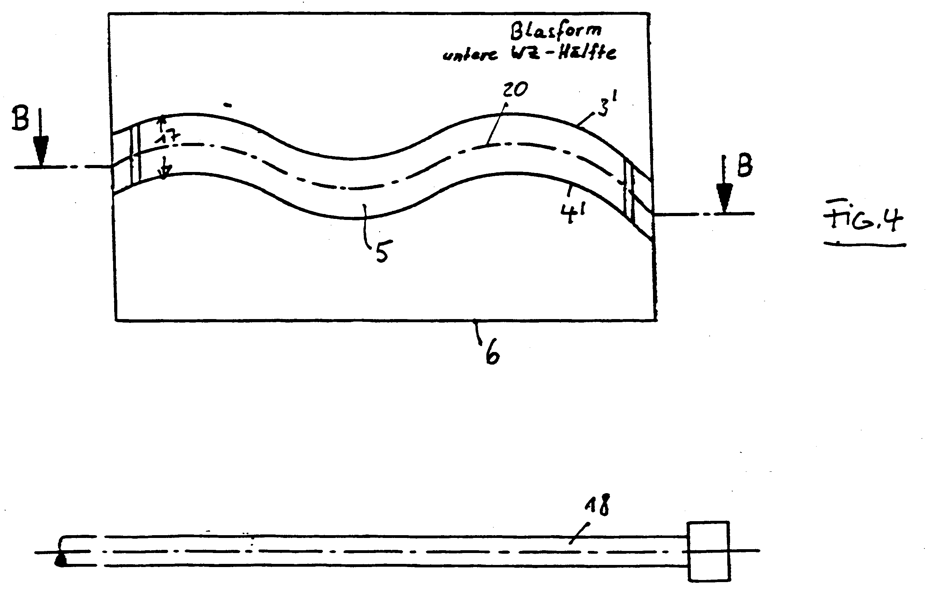

Die Vorformlings-Transportvorrichtung enthält zwei Seitenwandelemente 1, 2, deren einander zugewandte Innenseiten in der Aufsicht Randkonturen 3, 4 haben, die mit denjenigen des Formnestes 5 der unteren Blasformhälfte 6 (Fig. 4) übereinstimmen. Im Vertikalschnitt verlaufen die Innenwandflächen 3, 4 vertikal, wie Fig. 2 zeigt.

In die Seitenwandelemente 2, 3 sind Stangen 6, 7 eingebettet, die in Längsrichtung 8 der Vorformlings-Transportvorrichtung wechselseitig zueinander versetzt befestigt sind. Die Stangen 6, 7 überlappen sich im Schlauchaufnahmezustand der Vorformlings-Transportvorrichtung in dem Bereich, der einen aus einem Schlauchkopf 9 austretenden Vorformlingschlauch 10 geradlinig aufnimmt. Der Schlauchkopf 9 ist horizontal angeordnet.

Den jeweils an einem Seitenwandelement befestigten Stangen 6, 7 gegenüberliegend sind in dem jeweils anderen Seitenwandelement Bohrungen 11 ausgebildet, in die die freien Endabschnitte der Stangen 6, 7 eintreten, wenn die Seitenwandelemente 1, 2 soweit aufeinander zu bewegt werden, daß der Abstand zwischen ihren Innenwänden 3, 4 im wesentlichen der Dicke des Vorformlingschlauches 10 entspricht. Dieser Zustand wird als "geschlossen" bezeichnet.

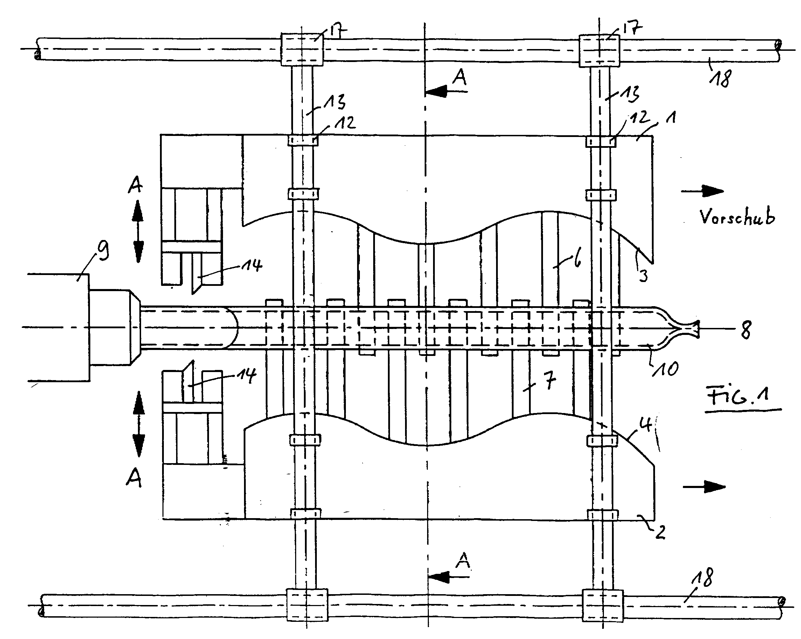

Die Seitenwandelemente 1, 2 sind mittels Halterungen 12 an Querholmen 13 aufgehängt und auf diesen beispielsweise an mit Kugellagern versehenen Hülsen geführt. Mittels nicht dargestellter Antriebseinrichtungen, beispielsweise pneumatischer Kolben/Zylinderanordnungen sind die Seitenwandelemente 1, 2 aufeinander zu und voneinander weg bewegbar, wie durch den Doppelpfeil A in Fig. 1 angedeutet ist.

An der hinteren Stirnseite der Seitenwandelemente 1, 2 sind zwei einander gegenüberliegende Quetschplatten 14 mit den zu ihrer Betätigung erforderlichen Bauteilen wie Halterung, Führung, Betätigungseinrichtung etc. befestigt. Die Quetschplatten werden aufeinander zu bewegt, wenn der aus dem Schlauchkopf 9 ausgetretene und auf die Stäbe 6, 7 gelegte Schlauch 10 eine vorbestimmte Länge erreicht hat, wodurch das Ende 15 des Vorformlingschlauchs 10 ebenso wie der Anfang 16 des nachfolgenden Schlauchsstücks verschlossen wird. Da beim Ausbringen des Schlauchs 10 Stützluft in den Schlauch eingeblasen wird, wird diese Stützluft nach dem Abtrennen und Verschließen des Vorformlingschlauchs 10 in diesem eingeschlossen, so daß der Vorformlingschlauch 10 nicht zusammenfallen kann.

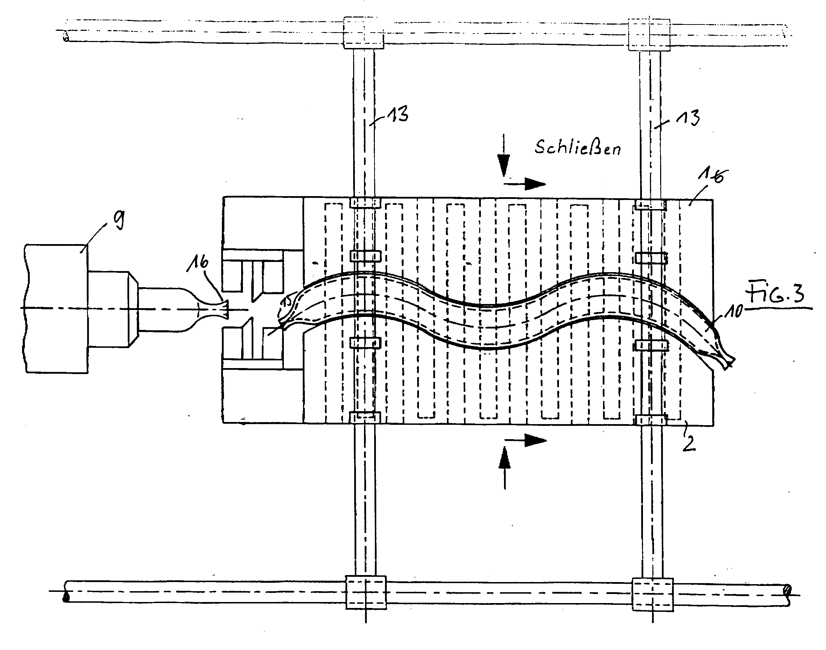

Fig. 3 zeigt den geschlossenen Zustand der Vorformlings-Transportvorrichtung, bei dem der Vorformlingschlauch 10 in der Aufsicht eine Form angenommen hat, die mit derjenigen des Formnestes 5 der unteren Blasformhälfte 6 übereinstimmt, mit der Ausnahme, daß der Abstand zwischen den Innenwänden 3, 4 der Seitenwandelemente 1, 2 kleiner ist als die Breite 17 des Formnestes 5, da der Vorformlingschlauch 10 in dem Formnest 5 ja noch zu dem endgültigen Produkt aufgeblasen wird.

Die Querholme 13 sind verschieblich an Längsholmen 18 befestigt, und dabei wiederum beispielsweise an Kugellagerhülsen 17 geführt. Die Längsholme 18 verlaufen von dem Blaskopf 9 (genauer gesagt über diesen hinaus) zu der Blasstation. Eine nicht dargestellte Antriebsvorrichtung bewegt die Vorformlings-Transportvorrichtung zwischen der Schlauchaufnahmeposition und der Vorformling-Abgabeposition.

Wenn die Vorformlings-Transportvorrichtung so über der unteren Blasformhälfte 6 positioniert ist, daß die Mittellinie 19 des Vorformlingschlauchs 10 über der Mittellinie 20 des Formnestes 5 der unteren Blasformhälfte 6 positioniert ist, wird die Vorformlings-Transportvorrichtung weit geöffnet, indem die Seitenwandelemente 1, 2 soweit auseinandergefahren werden, daß der Vorformlingsschlauch 10 zwischen den freien Enden 21 der Stangen 6, 7 herabfallen kann.

Alternativ hierzu kann die Freigabe so erfolgen, daß im geschlossenen Zustand (Fig. 3) die Stangen 6, 7 nach außen aus den Seitenwandelementen 1, 2 herausgezogen werden, bis der gesamte Boden des Zwischenraums zwischen den Seitenwandelementen 1, 2 offen ist.

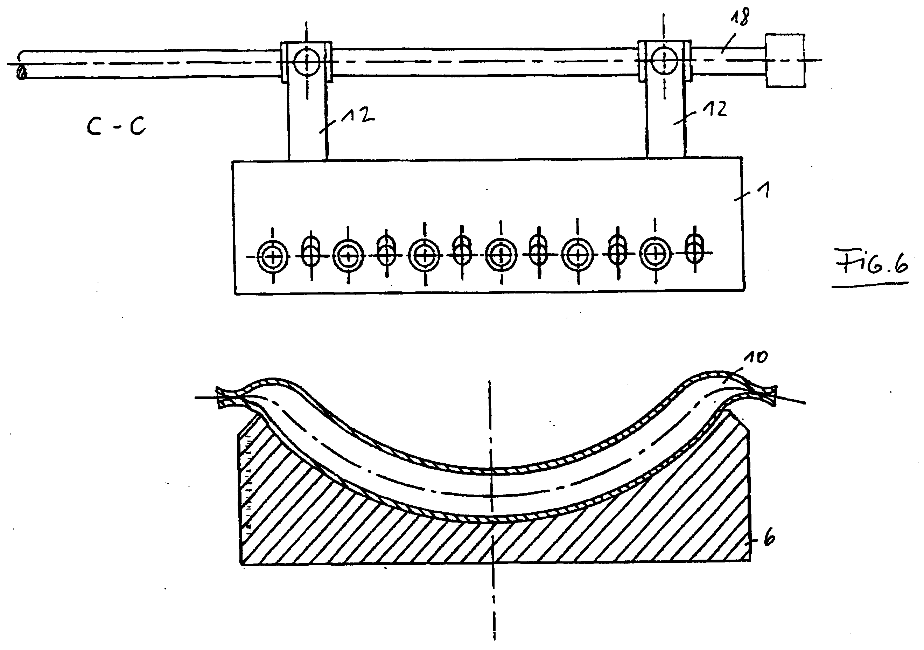

Fig. 6 zeigt den Zustand, in dem der Vorformlingschlauch 10 in der Formmulde 5 der unteren Blasformhälfte 6 angeordnet ist. Die Blasform wird nun mittels der oberen Blasformhälfte (nicht dargestellt) geschlossen, woraufhin durch eine nicht dargestellte Blasnadel bevorzugt Luft in den Vorformlingschlauch eingeführt wird, die ihn gegen die Wandung des Formnestes 6 drückt und dadurch den gewünschten Hohlkörper ausformt. Die Vorformlings-Transportvorrichtung wird wieder in die Schlauchaufnahmeposition verfahren.

## Patentansprüche

1. Vorformlings-Transportvorrichtung, die zwischen dem Schlauchkopf und der eine geteilte Blasform mit einem Formnest enthaltenden Blasstation einer Blasmaschine bewegbar ist,
**dadurch gekennzeichnet**,
daß die Vorformlings-Transportvorrichtung Seitenwandelemente (1, 2) aufweist, deren einander zugewandte Innenflächen (3, 4) in der Aufsicht dem Verlauf der Randkonturen (3', 4') des Formnestes (5) der unteren Blasformhälfte (6) entsprechend geformt sind, und daß die Seitenwandelemente aufeinander zu und voneinander weg bewegbar angeordnet sind.

2. Vorformlings-Transportvorrichtung nach Anspruch 1,
dadurch gekennzeichnet, daß die Seitenwandelemente (1, 2) jeweils mit zugehörigen Bodenelementen (6, 7) verbunden sind.

3. Vorformlings-Transportvorrichtung nach Anspruch 1 oder 2,
dadurch gekennzeichnet, daß die Bodenelemente Stangen (6, 7) sind, die in Längsrichtung (8) der Vorformlings-Transportvorrichtung versetzt zueinander wechselseitig an den Seitenelementen (1, 2) befestigt sind.

4. Vorformlings-Transportvorrichtung nach Anspruch 3,
dadurch gekennzeichnet, daß die Stangen (6, 7) eine solche Länge haben, daß sie sich in der Schlauchaufnahmeposition überlappen.

5. Vorformlings-Transportvorrichtung nach einem der Ansprüche 1 bis 4,
dadurch gekennzeichnet, daß in den Seitenwandelementen (1, 2) Bohrungen (11) zum Eintritt der Stangen (6) der gegenüberliegenden Seite ausgebildet sind.

6. Vorformlings-Transportvorrichtung nach Anspruch 1 oder 2,
dadurch gekennzeichnet, daß die Bodenelemente beweglich an den Seitenwandelementen gehalten sind.

7. Verfahren zum Herstellen von ein- oder mehrfach gekrümmten Hohlkörpern wie Rohrstücken mit folgenden Schritten:
a) ein Schlauchkopf trägt einen warmplastisch verformbaren Schlauch aus,
b) eine zwei seitlich bewegliche Seitenwandelemente aufweisende Vorformlings-Transportvorrichtung wird im geöffneten Zustand geradlinig unter dem Schlauchkopf bewegt und nimmt auf ihren Bodenelementen den Schlauch auf,
c) die Seitenwandelemente der Vorformlings-Transportvorrichtung werden vor, während oder nach dem Transport der Vorformlings-Transportvorrichtung zu der Blasstation so aufeinander zu bewegt, daß sie eine Formmulde begrenzen, deren Krümmungsverlauf demjenigen des Formnestes der Blasform entspricht,
d) der Boden der Vorformlings-Transportvorrichtung wird geöffnet, so daß der Vorformling in das Formnest der Blasform fällt und
e) die Vorformlings-Transportvorrichtung wird aus dem Bereich der Blasform wegbewegt, woraufhin die Blasform geschlossen und der Vorformling durch Einführen eines Blasmediums gegen die Wandung eines Formnestes gedrückt wird.
